Europäisches Patentamt

European Patent Office

Office européen des brevets

(19)

(11) **EP 1 246 387 A1**

(12) ## DEMANDE DE BREVET EUROPEEN

(43) Date de publication:
**02.10.2002 Bulletin 2002/40**

(51) Int Cl.[7]: **H04L 7/027**, H04J 13/00, H04L 7/04, H04L 7/02

(21) Numéro de dépôt: **02290421.3**

(22) Date de dépôt: **21.02.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **15.03.2001 FR 0103528**

(71) Demandeur: **ALCATEL**
**75008 Paris (FR)**

(72) Inventeurs:
• **Buda, Fabien**
**75014 Paris (FR)**

• **Lemois, Emmanuel**
**75015 Paris (FR)**
• **Cueff, Valérie**
**75015 Paris (FR)**
• **Debbah, Michael**
**75017 Paris (FR)**

(74) Mandataire: **Smith, Bradford Lee et al**
**COMPAGNIE FINANCIERE ALCATEL**
**Département de la Propriété Industrielle,**
**30, Avenue Kléber**
**75116 Paris (FR)**

(54) **Procédé de récupération de rythme de paquets de signaux numériques**

(57) L'invention concerne un procédé de réception de signaux numériques émis par paquets et modulés, par exemple en modulation de phase et/ou en modulation d'amplitude, dans lequel on échantillonne les signaux analogiques reçus et on détermine individuellement, pour chaque paquet, les instants optimaux d'échantillonnage.

Pour l'estimation de l'instant optimal d'échantillonnage, on effectue au moins deux estimations indépendantes et décorrélées et on combine ces estimations de façon que la variance de l'estimation obtenue par la combinaison soit plus faible que la plus petite des variances des estimations indépendantes.

Ainsi, la qualité (18) de la combinaison est supérieure à la qualité (14, 16) de la meilleure des estimations.

FIG.2

EP 1 246 387 A1

**Description**

L'invention concerne un procédé de récupération de rythme de paquets de signaux numériques.

La transmission de signaux numériques par paquets constitue actuellement une technique courante dans le domaine des télécommunications.

La transmission physique de signaux numériques peut s'effectuer de diverses manières. Les modulations couramment utilisées sont la modulation de phase MPSK (M-ary Phase Shift Keying) et la modulation de phase et amplitude QAM (Quadrature Amplitude Modulation), qui utilisent des constellations a M états, dans lesquelles chaque symbole permet la transmission de p bits, avec $M=2^p$.

En réception le signal analogique reçu est échantillonné afin de pouvoir subir un traitement de type numérique. La fréquence d'échantillonnage est nécessairement limitée par des contraintes technologiques et de coût. Plus la fréquence d'échantillonnage est basse et plus le traitement en vue de la détection peut être effectué rapidement. Ainsi on détecte un nombre limité d'échantillons par symboles, par exemple quatre échantillons par symbole.

La limitation du nombre d'échantillons oblige à synchroniser de façon optimale l'échantillonnage pour chaque paquet. Cette synchronisation est appelée synchronisation échantillon ou récupération de rythme. Elle consiste à déterminer pour chaque paquet l'instant optimal de l'échantillonnage. À cet effet on effectue un premier échantillonnage et on détermine le déphasage qu'il est nécessaire d'appliquer à la fréquence d'échantillonnage pour obtenir les instants optima d'échantillonnage.

Cette synchronisation de la fréquence d'échantillonnage aux paquets reçus doit être effectuée individuellement pour chaque paquet, car, en général, les paquets reçus sont indépendants les uns des autres. Par exemple, dans un système de télécommunication à chaque zone, ou cellule, est affectée une station de base et chaque terminal émet vers la station de base ; dans la station de base les paquets reçus qui se succèdent sont, en général, indépendants les uns des autres car ils proviennent de terminaux différents.

Il est à noter que la détection des paquets nécessite aussi la détermination du premier symbole de chaque paquet. Cette détermination est appelée la "synchronisation de paquet" alors que, rappelons le, la synchronisation de l'échantillonnage est appelée la "récupération de rythme" ou encore "synchronisation de rythme".

On connaît plusieurs types d'algorithme pour effectuer la synchronisation de rythme et pour effectuer la synchronisation de paquet. Un premier type d'algorithme est basé sur le procédé qui consiste à déterminer séparément, en succession, la synchronisation de rythme et la synchronisation de paquet, cette dernière synchronisation étant effectuée après la synchronisation de rythme. Un second type d'algorithme consiste à déterminer simlultanément l'instant optimal d'échantillonnage et le début du paquet.

L'invention part de la constatation que les procédés connus de récupération de rythme ne fournissent pas de résultats satisfaisants lorsque les paquets sont courts, par exemple contenant moins de 500 symboles, et/ou que le rapport signal à bruit du signal reçu est relativement faible. En effet avec des paquets courts on constate, dans certaines circonstances, des taux d'erreurs relativement élevés, inadmissibles pour un certain nombre d'applications. En outre, quelle que soit la longueur des paquets, il est connu qu'un rapport signal à bruit faible entraîne des taux d'erreurs élevés.

L'invention remédie à ces inconvénients.

Elle est caractérisée en ce que, pour effectuer une synchronisation de rythme sur des paquets numériques, notamment des paquets contenant moins de 500 symboles, on estime à l'aide d'au moins deux procédés différents et décorrélés l'instant optimal d'échantillonnage et on combine ces estimations de façon que la variance de l'estimation combinée soit inférieure à la plus petite des variances obtenues avec les estimations séparées.

Dans le mode de réalisation préféré de l'invention on combine de façon linéaire les estimations et on applique à chaque estimation un coefficient de pondération qui permet de minimiser la variance de la combinaison.

En mode de transmission du type TDMA (Time Division Multiple Access), dans lequel les paquets sont tous de même nature et ont une même durée, les coefficients de pondération ne dépendent que des variances respectives des estimateurs, et ne dépendent donc que du rapport signal à bruit.

Dans certains cas les paquets peuvent présenter des caractéristiques différentes d'un paquet à un autre. Dans cette situation les coefficients de pondération peuvent varier d'un paquet à un autre. Par exemple si on considère une transmission en mode CDMA (Code Division Multiple Access) de paquets contenant tous le même nombre de symboles, la durée d'un paquet diminue quand le nombre de codes empilés augmente.

Dans ce cas on utilise une combinaison de deux procédés d'estimation, dont l'un fournit de bons résultats pour des paquets à nombre élevé de codes empilés et l'autre fournit des bons résultats d'estimation pour des paquets à faible nombre de code(s). Les coefficients de pondération pourront alors varier d'un paquet à un autre ; l'estimation obtenue avec un procédé fournissant le meilleur résultat pour un faible nombre de codes a le plus grand poids dans cette situation, et l'estimation fournissant un meilleur résultat pour un grand nombre de codes a un plus grand poids dans cette dernière situation.

De préférence, l'estimation s'effectue par traitement en bloc, c'est-à-dire en mode "feedforward", le traitement s'effectuant sur les échantillons reçus, en les retardant de la durée du traitement.

Dans un mode de réalisation chaque paquet comprend un nombre de symboles compris entre 100 et 500.

En bref, l'invention concerne un procédé de réception de signaux numériques émis par paquets et modulés, par exemple en modulation de phase et/ou en modulation d'amplitude, dans lequel on échantillonne les signaux analogiques reçus et on détermine individuellement, pour chaque paquet, les instants optimaux d'échantillonnage. Ce procédé est tel que, pour l'estimation de l'instant optimal d'échantillonnage, on effectue au moins deux estimations indépendantes et décorrélées et on combine ces estimations de façon que la variance de l'estimation obtenue par la combinaison soit plus faible que la plus petite des variances des estimations indépendantes.

Dans une réalisation, la combinaison des estimations est linéaire.

La combinaison est par exemple telle qu'on confère un coefficient de pondération plus important à l'estimation fournissant la plus faible variance.

Lorsque les paquets sont toujours de même nature, la combinaison des estimations peut être la même pour tous les paquets.

Lorsque les paquets varient de nature d'un paquet à un autre, la combinaison peut varier avec la nature du paquet.

Quand les paquets sont transmis selon une transmission CDMA, et quand le nombre de codes d'un paquet est variable, on peut appliquer aux estimations des coefficients de pondération qui dépendent du nombre de codes dans chaque paquet.

Le nombre de symboles dans chaque paquet est par exemple compris entre 100 et 500.

L'estimation est, dans une réalisation, effectuée en temps différé.

Selon un mode de réalisation, au moins l'une des estimations est une estimation effectuant simultanément l'estimation de l'instant optimal d'échantillonnage et la détermination du symbole de début de paquet.

L'invention s'applique notamment à la réception de paquets de données numériques indépendants reçus de terminaux différents par une station de base.

D'autres caractéristiques et avantages de l'invention apparaîtront avec la description de certains de ses modes de réalisations, celle-ci étant effectuée en se référant aux dessins ci-annexés sur lesquels :

la figure 1 est un schéma montrant deux paquets, et
la figure 2 est un diagramme illustrant un résultat obtenu avec l'invention.

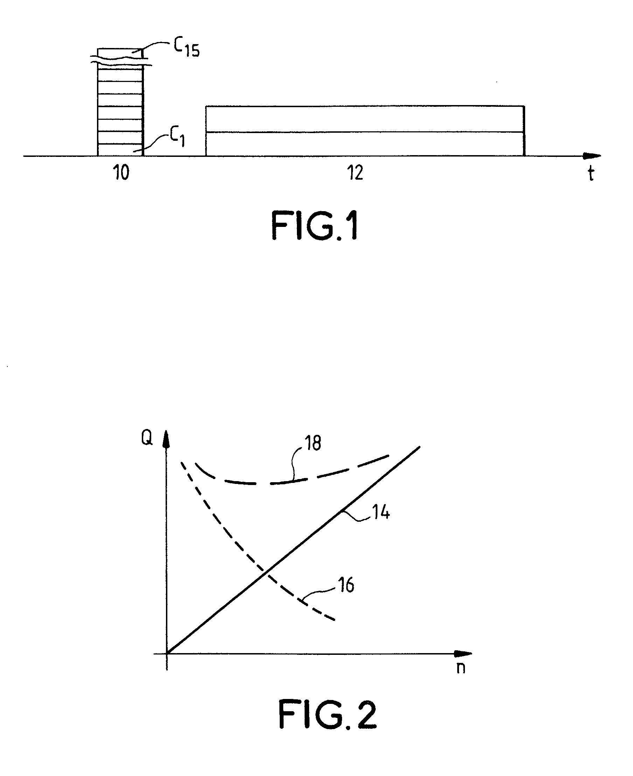

On décrira tout d'abord en relation avec la figure 1 une transmission en mode dit CDMA dans lequel chaque paquet comprend un nombre déterminé de symboles, par exemple 400. Si chaque symbole a deux bits cela signifie que chaque paquet contient 800 bits. En outre le nombre de codes peut varier d'un paquet à un autre. Ainsi, sur la figure 1 on a représenté deux paquets successifs 10 et 12, le premier paquet 10 contenant 15 codes et le second paquet 12 n'en contenant que deux. Les symboles affectés de codes différents sont transmis simultanément. Ainsi, un paquet 10 contenant un nombre élevé de codes sera plus court (en temps) qu'un paquet 12 contenant un faible nombre de codes.

L'estimation de l'instant optimal d'échantillonnage de tels paquets qui est obtenue avec les procédés connus d'estimation aboutit à des résultats inhomogènes. Par exemple, le procédé d'estimation dit de MEYR fournit des résultats satisfaisants pour un nombre de codes relativement élevé. Par contre pour des paquets à faible nombre de codes l'estimation obtenue présente une plus grande variance. Ce procédé d'estimation de MEYR est décrit dans un article intitulé "Digital filter and square timing recovery" de Martin OERDER et Heinrich MEYR publié dans "IEEE transactions on communications", volume 36, n°5, mai 1988, pages 605 à 611.

De façon complémentaire un algorithme dit à mot unique ou "unique word" fournit des résultats satisfaisants d'estimation pour des paquets de type 12 mais des résultats moins satisfaisants pour des paquets de type 10, à plus grand nombre de codes.

Pour obtenir une estimation fournissant des résultats meilleurs et plus homogènes que chacun des procédés d'estimation pris individuellement on combine les deux estimations en affectant un coefficient à chacune des deux estimations. Les coefficients dépendent du nombre de codes. Par exemple, l'estimation de l'instant optimal $\tau$ d'échantillonnage sera obtenue grâce à la formule suivante :

$$\tau = \frac{\alpha_1 \tau_M + \alpha_2 \tau_{UW}}{\alpha_1 + \alpha_2} \tag{1}$$

Dans cette formule $\tau_M$ représente l'estimation obtenue avec le premier procédé dit de MEYR, qui est optimisée pour un nombre élevé de codes, et $\tau_{UW}$ représente l'estimation obtenue à l'aide d'un procédé optimisé pour un faible nombre de codes, et $\alpha_1$ et $\alpha_2$ sont les coefficients de pondération.

Pour un grand nombre de codes le coefficient $\alpha_1$ sera élevé et le coefficient $\alpha_2$ faible et, réciproquement, pour un faible nombre de codes le coefficient $\alpha_1$ sera faible et le coefficient $\alpha_2$ élevé.

Pour déterminer les coefficients $\alpha_1$ et $\alpha_2$ qui fournissent la variance minimale de $\tau$, on peut se baser sur le calcul suivant :

Soit K le rapport entre les deux variances : $\sigma_M^2$ (de $\tau_M$) et $\sigma_{uw}^2$ (de $\tau_{UW}$) :

$$K = \frac{E(\tau_M^2)}{E(\tau_{UW}^2)} = \frac{\sigma_M^2}{\sigma_{UW}^2}$$

De la formule (1), on déduit :

$$\tau = \left(\frac{\alpha_1}{\alpha_1 + \alpha_2}\right) \cdot \tau_M + \left(1 - \left(\frac{\alpha_1}{\alpha_1 + \alpha_2}\right)\right) \cdot \tau_{UW} = \alpha \tau_M + (1 - \alpha) \ \tau_{UW}$$

avec

$$\alpha = \frac{\alpha_1}{\alpha_1 + \alpha_2},$$

d'où :

$$\sigma^2 = \alpha^2 \sigma_M^2 + (1 - \alpha)^2 \sigma_{UW}^2 = \left(\alpha^2 K + (1 - \alpha)^2\right) \ \sigma_{UW}^2 \quad ;$$

$\sigma$ est la variance de $\tau$.

Pour obtenir la valeur minimale de la variance $\sigma^2$, on calcule la dérivée de $\sigma^2$ par rapport à $\alpha$ :

$$\frac{\partial \sigma^2}{\partial \alpha} = \sigma_{UW}^2 (2 \alpha K - 2(1 - \alpha)).$$

Cette dérivée est nulle pour $\alpha = \frac{1}{K+1}$, soit :

$$\sigma_{min}^2 = \frac{K}{K+1} \sigma_{UW}^2 = \frac{1}{K+1} \sigma_M^2$$

On voit qu'ainsi, $\sigma_{min}^2$, la variance de $\tau$, est plus petite que la plus petite des variances.

En outre, on observe que le calcul ci-dessus est indépendant des algorithmes utilisés et du type de paquet.

Dans le cas où les deux estimateurs ont même variance, la variance résultant d'une combinaison linéaire des deux variances est la moitié de la variance de chacun des deux estimateurs initiaux.

Les coefficients $\alpha_1$ et $\alpha_2$ sont par exemple emmagasinés dans un récepteur sous forme de table, c'est à dire qu'à chaque nombre de codes on affecte un couple de valeurs $\alpha_1$ et $\alpha_2$. Ces coefficients sont déterminés au préalable de façon empirique ou par calcul.

La figure 2 montre la variation de la qualité Q (qui est par exemple l'inverse de la variance) de chaque estimation (en ordonnées) en fonction du nombre n de codes (en abscisses).

La courbe 14 représente la variation de la qualité de l'estimation pour l'algorithme de MEYR. La courbe 16 représente la variation de la qualité en fonction du nombre de codes pour l'algorithme à mot unique et la courbe 18 représente la qualité de l'estimation combinée résultant de la formule (1) ci-dessus. On voit ainsi que la qualité de l'estimation combinée est supérieure à la qualité individuelle de chaque estimation.

L'invention n'est pas limitée à cet exemple. Elle concerne tout type de paquet. Elle s'applique aussi à une transmission de type TDMA. Dans ce cas les coefficients $\alpha_1$ et $\alpha_2$ peuvent être les mêmes pour tous les paquets.

De façon générale il suffit que les procédés de récupération de rythme utilisés soient différents et décorrélés pour obtenir une estimation de l'instant optimum d'échantillonnage qui soit meilleure que la meilleure des deux estimations obtenues avec chacune des estimations individuelles.

Il n'est pas indispensable que la combinaison soit linéaire.

De façon générale on déterminera par calcul, expérimentalement ou par simulation le meilleur type de combinaison qui puisse convenir.

On peut combiner ensemble deux ou plusieurs procédés de récupération de rythme, la seule contrainte étant qu'ils soient décorrélés. Il peut s'agir aussi bien d'estimateurs de rythme seul, que d'estimateurs conjoints de rythme et de début de paquet.

À titre d'exemple non limitatif de procédé d'estimation ou de récupération de rythme on peut encore citer (en plus du procédé MEYR et du procédé à mot unique) le procédé décrit par M. MOENCLAEY et T. BATSELE dans l'article intitulé : "Carrier Independent NDA Symbol Synchronization for M-PSK, Operating at only One Sample Per Symbol", paru dans GLOBECOM'90. pages 155 à 159.

Comme autre exemple on peut encore citer le procédé d'estimation décrit par K. MUELLER et M. MÜLLER dans un article intitulé "Timing Recovery in Digital Synchronous Data Receivers" paru dans IEEE Trans. Commun. Vol. 24 n°5, mai 1976.

L'invention concerne non seulement un procédé d'estimation mais également les récepteurs faisant appel à ce procédé.

Le procédé conforme à l'invention peut être réalisé à coût réduit car les procédés d'estimation indépendants et décorrélés qui sont utilisés peuvent être des procédés connus disponibles dans le commerce.

## Revendications

1. Procédé de réception de signaux numériques émis par paquets (10, 12) et modulés, par exemple en modulation de phase et/ou en modulation d'amplitude, dans lequel on échantillonne les signaux analogiques reçus et on détermine individuellement, pour chaque paquet, les instants optimaux d'échantillonnage, **caractérisé en ce que**, pour l'estimation de l'instant optimal d'échantillonnage, on effectue au moins deux estimations indépendantes et décorrélées et on combine ces estimations de façon que la variance de l'estimation obtenue par la combinaison soit plus faible que la plus petite des variances des estimations indépendantes.

2. Procédé selon la revendication 1 **caractérisé en ce que** la combinaison des estimations est linéaire.

3. Procédé selon la revendication 1 ou 2 **caractérisé en ce que** la combinaison est telle qu'on confère un coefficient de pondération plus important à l'estimation fournissant la plus faible variance.

4. Procédé selon l'une quelconque des revendications 1 à 3 **caractérisé en ce que** les paquets étant toujours de même nature, la combinaison des estimations est la même pour tous les paquets.

5. Procédé selon l'une quelconque des revendications 1 à 3 **caractérisé en ce que** les paquets variant de nature d'un paquet à un autre, la combinaison varie avec la nature du paquet.

6. Procédé selon la revendication 5 **caractérisé en ce que** les paquets étant transmis selon une transmission CDMA, et le nombre de codes d'un paquet étant variable, on applique aux estimations des coefficients de pondération qui dépendent du nombre de codes dans chaque paquet.

7. Procédé selon l'une quelconque des revendications précédentes **caractérisé en ce que** le nombre de symboles dans chaque paquet est compris entre 100 et 500.

8. Procédé selon l'une quelconque des revendications précédentes **caractérisé en ce que** l'estimation est effectuée en temps différé.

9. Procédé selon l'une quelconque des revendications précédentes, **caractérisé en ce qu'**au moins l'une des estimations est une estimation effectuant simultanément l'estimation de l'instant optimal d'échantillonnage et la détermination du symbole de début de paquet.

10. Application du procédé selon l'une quelconque des revendications précédentes à la réception de paquets de données numériques indépendants reçus de terminaux différents par une station de base.

EP 1 246 387 A1

FIG.1

FIG.2

## RAPPORT DE RECHERCHE EUROPEENNE

Office européen
des brevets

Numéro de la demande

EP 02 29 0421

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | MUELLER K H ET AL: "TIMING RECOVERY IN DIGITAL SYNCHRONOUS DATA RECEIVERS" IEEE TRANSACTIONS ON COMMUNICATIONS, IEEE INC. NEW YORK, US, vol. 24, no. 5, 1 mai 1976 (1976-05-01), pages 516-531, XP000573328 ISSN: 0090-6778 * le document en entier * | 1 | H04L7/027 H04J13/00 H04L7/04 H04L7/02 |
| D,A | OERDER M ET AL: "DIGITAL FILTER AND SQUARE TIMING RECOVERY" IEEE TRANSACTIONS ON COMMUNICATIONS, IEEE INC. NEW YORK, US, vol. 36, no. 5, 1 mai 1988 (1988-05-01), pages 605-612, XP000615025 ISSN: 0090-6778 * le document en entier * | 1 | |
| A | US 4 137 427 A (PILOST DANIEL ET AL) 30 janvier 1979 (1979-01-30) * abrégé; figures 1,6 * * colonne 8, ligne 17 - ligne 63 * | 1 | |

**DOMAINES TECHNIQUES RECHERCHES (Int.Cl.7)**

H04L
H04J

Le présent rapport a été établi pour toutes les revendications

| Lieu de la recherche | Date d'achèvement de la recherche | Examinateur |
|---|---|---|
| LA HAYE | 9 août 2002 | Fouasnon, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**    EP 02 29 0421

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-08-2002

| Document brevet cité au rapport de recherche | | Date de publication | Membre(s) de la famille de brevet(s) | | Date de publication |
|---|---|---|---|---|---|
| US 4137427 | A | 30-01-1979 | FR | 2358056 A1 | 03-02-1978 |
| | | | AU | 510474 B2 | 26-06-1980 |
| | | | AU | 2830077 A | 08-03-1979 |
| | | | CH | 624518 A5 | 31-07-1981 |
| | | | DE | 2729312 A1 | 19-01-1978 |
| | | | ES | 460526 A1 | 01-12-1978 |
| | | | GB | 1540510 A | 14-02-1979 |
| | | | IT | 1115359 B | 03-02-1986 |
| | | | JP | 1158747 C | 25-07-1983 |
| | | | JP | 53008507 A | 26-01-1978 |
| | | | JP | 57053018 B | 10-11-1982 |
| | | | SE | 435439 B | 24-09-1984 |
| | | | SE | 7707932 A | 10-01-1978 |

Pour tout renseignement concernant cette annexe : voir Journal Officiel de l'Office européen des brevets, No.12/82